Europäisches Patentamt

European Patent Office

Office européen des brevets

(19)

(11) Veröffentlichungsnummer: **0 201 052**
**B1**

(12) **EUROPÄISCHE PATENTSCHRIFT**

(45) Veröffentlichungstag der Patentschrift:
18.07.90

(51) Int. Cl.⁵: **B30B 11/20, A23K 1/00,**
**A23K 1/12, A23K 1/20**

(21) Anmeldenummer: 86106016.8

(22) Anmeldetag: 02.05.86

(54) Verfahren zum Erzeugen eines pelletierten Futtermittels, und Vorrichtung zur Durchführung des Verfahrens.

(30) Priorität: 09.05.85 CH 1962/85

(43) Veröffentlichungstag der Anmeldung:
17.12.86 Patentblatt 86/46

(45) Bekanntmachung des Hinweises auf die Patenterteilung:
18.07.90 Patentblatt 90/29

(84) Benannte Vertragsstaaten:
AT BE CH DE FR GB IT LI NL SE

(56) Entgegenhaltungen:
EP-A- 0 143 415
EP-A- 0 172 359
DE-C- 397 725
GB-A- 2 105 969
US-A- 4 162 881

(73) Patentinhaber: GEBRUEDER BUEHLER AG MASCHINENFABRIK, Maschinenfabrik,
CH-9240 Uzwil(CH)

(72) Erfinder: Ammann, Jörg, Weingartenstrasse 6,
CH-9242 Oberuzwil(CH)
Erfinder: Schaffner, Hans Peter, Armetsholzstrasse 2,
CH-9244 Niederuzwil(CH)
Erfinder: Ackermann, Ernst, Egghalde,
CH-9231 Egg/Flawil(CH)

(74) Vertreter: Révy von Belvárd, Peter, Im Lindengarten 18,
CH-9242 Oberuzwil(CH)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf eine Vorrichtung nach dem Oberbegriff des Anspruches 1.

· Zum aufeinanderfolgenden Pelletieren werden die verschiedensten Vorrichtungen eingesetzt - wie Extruder, kollergangähnliche Vorrichtungen, bei denen Rollen auf einer im wesentlichen ebenen Lochmatrize abwälzbar sind (vgl. EP-A 0 143 415) - jedoch auch Rollen-Pelletpressen, bei denen eine zylinderförmige Lochmatrize vorhanden ist, an der wenigstens eine Pressrolle abrollt. Darüberhinaus sind aber an sich auch zahlreiche Brikettiervorrichtungen zum Pelletieren bekannt geworden, wobei meist Walzen mit der halben Pelletform entsprechenden Ausnehmungen miteinander arbeiten.

Der Erfindung liegt die Aufgabe zugrunde, eine Vorrichtung der eingangs genannten Art zu vereinfachen bzw. die Verlässlichkeit zu verbessern und die Herstellung der Pellets zu rationalisieren. Dies gelingt erfindungsgemäss durch die kennzeichnenden Merkmale des Anspruches 1.

Das erfindungsgemässe Verfahren nach Anspruch 9 schafft, wiederum ausgehend von der schon genannten EP-A 0 143 415, durch seine kennzeichnenden Merkmale einen besonderen Rationalisierungseffekt, weil dann die zusätzlichen Aufwendungen auf jene Pellets konzentriert werden, die der Soll-Qualität nicht entsprechen. Zur Durchführung dieses Verfahrens ist vorzugsweise eine Vorrichtung nach Anspruch 10 vorgesehen.

Weitere Einzelheiten ergeben sich anhand der nachfolgenden Beschreibung von in der Zeichnung schematisch dargestellten Ausführungsbeispielen.

Es zeigen:

Fig. 1 + 2 ein erstes Ausführungsbeispiel einer Rollenpresse mit eingebauter Rückführanordnung, wobei Fig. 1 eine Frontansicht und Fig. 2 eine Seitenansicht mit Schnitt durch das Maschinengehäuse ist; die

Fig. 3 + 4 Einzelheiten einer zweiten Ausführungsform, wobei Fig. 3 eine Vorderansicht, teilweise im Schnitt nach Wegnahme des Gehäuses und des Matrizendeckels entlang der Linie III - III der Fig. 4 ist und Fig. 4 die zugehörige Draufsicht darstellt;

Fig. 5 eine dritte Ausführungsform einer Rollenpresse mit stillstehender Lochmatrize;

Fig. 6 eine Frontansicht einer vierten Ausführungsform mit konzentrischen Lochmatrizen; die

Fig. 7 + 8 eine fünfte Ausführungsform in Frontansicht bzw. im Schnitt; die

Fig. 9-11 eine sechste Ausführungsform, von der Fig. 9 einen Axialschnitt, Fig. 10 eine Draufsicht im Sinne des Pfeiles X der Fig. 9 und Fig. 11 eine Frontansicht veranschaulicht;

Fig. 12 ein Mühlendiagramm gemäss einer siebenten Ausführungsform; die

Fig. 13-16 eine achte und neunte Ausführungsform, wobei die Fig. 13 eine Gesamtansicht von der Frontseite ist, die Fig. 14 und 15 jeweils Einzelheiten im Schnitt veranschaulichen und Fig. 16 eine Draufsicht mit einem Blockschaltschema darstellt, von dem die

Fig. 17 verschiedene Ausführungsvarianten a) bis e) einer schaltungsmässigen Einzelheit illustriert.

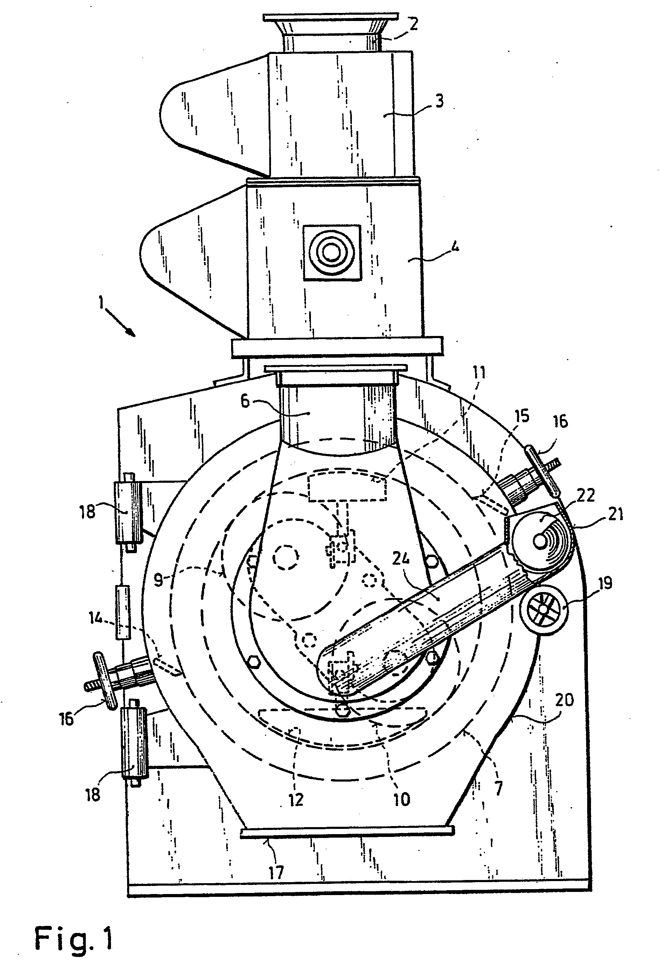

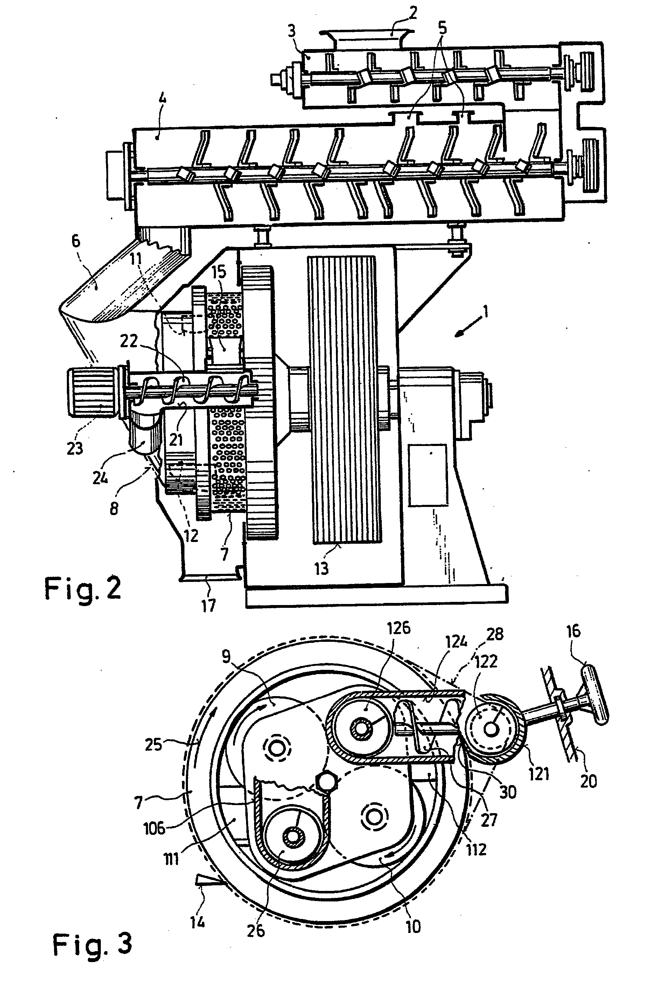

Gemäss den Fig. 1 und 2 wird in einer Pelletpresse 1 das zu pelletierende Material über einen Einlasstrichter 2, z.B. aus einem Silo, in einen Dosier-Schneckenapparat 3 eingefüllt, dessen als Paddelschnecke ausgebildetes Förderorgan das Material einer Mischvorrichtung 4 zuführt. Diese Mischvorrichtung kann weitere Anschlüsse 5 für die Zufuhr von Dampf bzw. flüssigen Bestandteilen besitzen, mag wie dargestellt, mit ähnlichen Paddeln versehen sein wie die Dosierschnecke 3, gewünschtenfalls jedoch mit einigen Unregelmässigkeiten, um den Mischprozess zu fördern.

Anschliessend gelangt das Material über einen Einlassschacht 6 in einen sich mit einer Lochmatrize 7 mitdrehenden Matrizendeckel 8, von dem aus die Verteilung des Materials zu den Pressrollen 9, 10 über lediglich strichliert angedeutete Leitschaufeln 11, 12 erfolgt. Die Leitschaufeln 11, 12 sind vorzugsweise entsprechend der EP-OS 0 172 359 ausgebildet und angeordnet.

Die Lochmatrize 7 ist über ein Riemenrad 13 (Fig. 2) antreibbar, und bei Drehung der Matrize 7 rollen die beiden Pressrollen 9, 10 an deren Innenfläche ab, wobei das über die Leitschaufeln 11, 12 aus dem Matrizendeckel abgestreifte und der Innenfläche der Lochmatrize 7 zugeführte Material mit Hilfe der Pressrollen 9, 10 durch die aus Fig. 2 ersichtlichen Löcher der Matrize 7 hindurchgepresst werden. Am Aussenumfange wird dann das hindurchgetretene, entsprechend der Lochform gepresste Material mit Hilfe von Abstreifmessern 14, 15 (Fig. 1), z.B. nach jeweils einer Pressrolle 9, 10 abgestreift, wobei die Messer 14, 15 mit Hilfe von Handrädern 16 in annähernd radialer Richtung justierbar sind. Das von den Abstreifmessern 14, 15 abgestreifte Material fällt dann in einen Auslass 17, von wo es in der jeweils gewünschten Weise weiterbefördert wird.

Die bisher beschriebenen Teile sind herkömmlicher Natur und können entsprechend dem Stande der Technik beliebig modifiziert werden. Darüberhinaus aber ist innerhalb der Pelletpresse 1 eine Rückführanordnung vorgesehen, die nachstehend beschrieben werden soll.

Das um Scharniere 18 nach Oeffnen eines Verschlussrades 19 verschwenkbare Frontgehäuse 20 weist eine als Schneckengehäuse ausgebildete Ausbuchtung 21 auf. In diesem Schneckengehäuse 21 ist eine Schnecke 22 drehbar gelagert und beispielsweise über einen gesonderten Motor 23 (Fig. 2) direkt oder vorzugsweise über ein dazwischen liegendes Vorgelege untersetzt, antreibbar. Das Schneckengehäuse 21 weist im Bereiche des Abstreifmessers 15 eine Oeffnung auf, die gemäss der Darstellung der Fig. 1 und 2 unmittelbar unter dem Messer 15 liegt, so dass die abgestreiften Pellets in das Schneckengehäuse 21 fallen und dort mit Hilfe der Schnecke 22 gegen einen Schrägschacht 24 am anderen Ende des Schnekkengehäuses weiterbefördert werden. Die noch warmen und feuchten bzw. relativ weichen Pellets fallen über diesen Schrägschacht 24 in das untere Ende des Einlassschachtes 6, von wo sie, vermischt mit dem vom Mischer 4 von oben her zugeführten neuen Material, neuerlich den Matrizendeckel 8 für eine weitere Verpressung zugeführt werden.

Hier sei daran erinnert, dass die Pelletpresse 1 eine Bearbeitung des zugeführten Materiales in zweifacher Hinsicht vornimmt. Einerseits wird das im Mischer in einen weichen, verformbaren Zustand überführte Material in eine der Querschnittsform der Löcher der Matrize 7 entsprechende Form gebracht, anderseits kann es nicht ausbleiben, dass mit der Pressung der Rollen 9, 10 an der Innenfläche der Matrize 7 auch eine gewisse Zerkleinerungswirkung verbunden ist. Dadurch, dass das bereits einmal pelletierte Material neuerlich der Lochmatrize 7 zugeführt wird, wird die Verkleinerungswirkung verdoppelt, wobei sich wesentlich höhere Dichten des Endproduktes erzielen lassen. Die so hergestellten Pellets sind einerseits abriebfester bzw. lässt sich auch zum Verpressen an sich weniger geeignetes Material zur Erzeugung der Pellets verwenden. Dies wiederum liegt mindestens zum Teil auch daran, dass das Material über längere Zeit im heissen, feuchten Zustand verbleibt, die Einzelteile daher besser durchtränkt werden, und auch länger der Wärmeeinwirkung ausgesetzt sind, was zusätzlich eine Verbesserung der Sterilisationswirkung mit sich bringt.

Es versteht sich, dass für die Rückführanordnung nicht unbedingt eine Schnecke 22 verwendet werden muss, vielmehr könnte auch eine reine Fallförderung des pelletierten Materiales erfolgen, wenn das Gehäuserohr 21 entsprechend geneigt angeordnet wird. Anderseits kann es sich für manche konstruktiven Ausgestaltungen als zweckmässig erweisen, auch im Kanalabschnitt 24 eine Fördereinrichtung, z.B. eine Schnecke, insbesondere eine Mischerschnecke, vorzusehen.

Da, wie erwähnt, das über den Schrägschacht 24 rückgeführte, pelletierte Material sich innerhalb des Einlassschachtes 6 zwangsläufig mit dem vom Mischer 4 neu zugeführten Material vermischt, ergibt es sich, dass ein Teil des Materiales nur ein einziges Mal die Lochmatrize 7 passiert, dann vom Messer 14 (Fig. 1) abgestreift wird und in den Auslass 17 fällt. Anderseits mögen andere Materialteilchen, gemäss einer Zufallsverteilung, mehrmals die Lochmatrize 7 passieren, wobei sie immer wieder vom Messer 15 der Schnecke 22 zugeleitet werden. Dieser Effekt wird in vielen Fällen keinen nachteiligen Einfluss haben, weil, wie bereits erwähnt, die stärkere Zerkleinerung eine bessere Kompaktierung und damit einen besseren Zusammenhalt der so erzeugten Pellets ergibt und daher im Durchschnitt dennoch eine Qualitätsverbesserung resultiert. Wie aus Fig. 2 ersichtlich (entsprechend der schon erwähnten EP-OS 0 172 359, erstreckt sich die obere Leitschaufel 11 nur über einen Teil der axialen Länge des Matrizendeckels 8 und erhält - aufgrund der Querstellung der unteren Leitschaufel 12 (vgl. Fig. 1) und der damit verbundenen Unmöglichkeit des Zutrittes von aus dem Einfüllschacht neu hinzu kommenden Material zur Lochmatrize 7 - als erstes das frische Material, die sich über die gesamte axiale Länge erstreckende Leitschaufel 12 hingegen den Rest.

Dieser Effekt könnte nun so ausgenützt werden, dass das über den Schrägschacht 14 rückgeführte Material entweder erst hinter der oberen Leitschaufel 11 eingegeben wird und/oder in den von der Leitschaufel 11 nicht überstrichenen Axialbereich des Matrizendeckels 8 (Fig.2), so dass über die Leitschaufel 11 das frische Material ausschliesslich der Pressrolle 10 zugeführt wird, das bereits einmal pelletierte Material ausschliesslich über die Leitschaufel 12 der Pressrolle 9. In einem solchen Falle könnte es zweckmässig sein, die Rückführleitung - bezogen auf Fig. 1 - an der linken Seite der Pelletpresse 1 in analoger Weise anzuordnen, wie dies in Fig. 1 an der rechten Seite dargestellt ist.

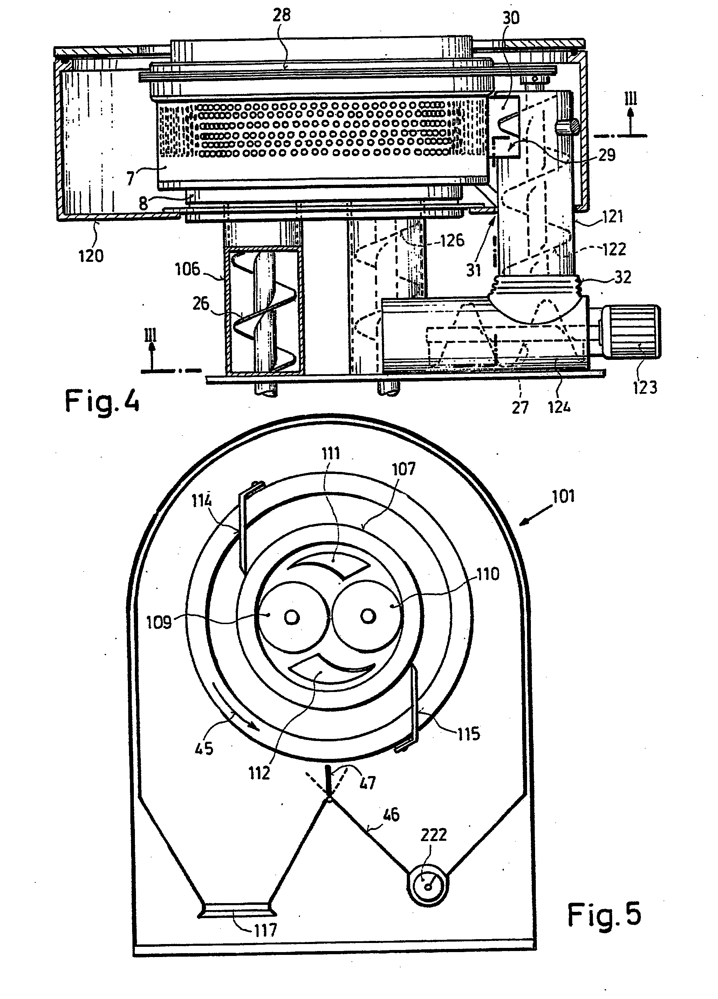

Eine andere Möglichkeit der eindeutigen Zuführung des frischen bzw. des bereits pelletierten Materiales zu einer jeweils zugeordneten Pressrolle sei anhand der Fig. 3 und 4 veranschaulicht, die eine Abwandlung einer, beispielsweise aus den US-PSen Nr. 3 045 280, 3 932 091 oder 4 162 881 bekannten Schneckenzuführeinrichtungen für eine Lochmatrize 7 zeigen. Alle Teile gleicher Funktion wie beim vorher beschriebenen Ausführungsbeispiel besitzen die selben Bezugszeichen und Teile ähnlicher Funktionen die selben Bezugszeichen aber mit einer Hunderter-Ziffer versehen. Dabei sei angenommen, dass die Lochmatrize 7 - ebenso wie im vorherigen Ausführungsbeispiel - entsprechend dem Pfeil 25 im Uhrzeigersinne dreht. Der Antrieb hierfür ist nicht dargestellt und kann entsprechend den vorigen Figuren ausgebildet sein. Entsprechend den oben genannten US-Patenten wird einer Zufuhrschnecke 26 das vom Speiseapparat (vgl. 3, 4 in Fig. 2) kommende frische Material über einen Zufuhrschacht 106 zugeführt. Wie Fig. 3 zeigt, liegt die Schnecke 26 - bezogen auf den Drehsinn der Lochmatrize 7 - vor der Pressrolle 9.

Vor der Pressrolle 10 ist ebenfalls eine Zufuhrschnecke 126 angeordnet, wie es an sich der bekannten Ausführungsform entspricht. Abweichend von dieser, erhält jedoch die Schnekke 126 das der Rolle 10 zuzuführende Material nicht über den Einlassschacht 106, sondern über einen seitlichen Kanal 124, der im Gegensatz zum Schrägschacht 24 beim Ausführungsbeispiel nach den Figuren 1 und 2 im wesentlichen horizontal angeordnet ist und daher in seinem Inneren eine Fördereinrichtung, bevorzugt in Form einer Schnecke 27, birgt. Die Schnecke 27 wird von einem, in Fig. 4 lediglich angedeuteten Motor 123 angetrieben.

Ebenso wie im vorherigen Ausführungsbeispiel wird dem Kanal 124 das von Lochmatrize 7 abgestreifte Material über eine Schnecke 122 zugeführt. Diese Schnecke 122 wird in diesem Falle mit Hilfe einer Kette 28 vom Matrizenantrieb her angetrieben, obwohl es an sich bevorzugt ist, einen gesonderten Schneckenantrieb vorzusehen, der dann problemlos mit dem Frontgehäuse (vgl. 20 in Fig. 1) verschwenkbar ist. Hier soll lediglich gezeigt werden, dass man bei der Verwirklichung der Erfindung auf diese Art des Antriebes keineswegs beschränkt ist.

Die Schnecke 122 dreht sich in einem Schneckengehäuse 121, das an dem der Lochmatrize 7 zugekehrten Ende wiederum eine Oeffnung 29 besitzt. Ein Lappen 30 dieses Gehäuses 121 ist aus der Zylinderebene herausgebogen und dient gleichzeitig als Abstreifmesser. Dies bedingt allerdings, dass das gesamte Gehäuse 121 mit Hilfe des Handrades 16 (Fig. 3) in Richtung auf die Lochmatrize 7 zu oder von ihr weg verstellbar ist, was im Falle des Antriebes über die Kette 28 bzw. auch bei einem gesonderten Antrieb relativ leicht zu bewerkstelligen ist. Hierzu braucht lediglich die das Schneckengehäuse 121 aufnehmende Oeffnung 31 im Gehäuse 120 etwas grösser bemessen sein, um eine Querbewegung des Schneckengehäuses 121 zuzulassen. Das Gleiche gilt für die Einmündungsöffnung in den Seitenkanal 124, wobei die Verbindungsstelle durch einen flexiblen Balg 32 abgedeckt sein kann. Im Bedarfsfall ist so der Querkanal 124 samt dem Balg 32 vom Schneckengehäuse 121 abziehbar.

Aus Fig. 3 ist leicht ersichtlich, dass das frische Material zunächst über die Schnecke 26 der Pressrolle 9 zugeführt wird und so ein erstes Mal pelletiert wird, worauf es durch den Lappen 30 in das Schneckengehäuse 121 eingespeist wird. Das pelletierte Material wird anschliessend von der Schnecke 122 dem Querkanal 124 mit der Schnecke 27 zugeführt, die das pelletierte Material über die Zufuhrschnecke 126 neuerlich der Lochmatrize 7 zuführt, wobei diesmal die Pressrolle 10 zur Wirkung kommt. Daher streift das Messer 14 das nun zum zweiten Mal pelletierte Material ab.

Anhand der Fig. 5 soll gezeigt werden, dass die Erfindung keineswegs auf Pelletpressen mit angetriebener Lochmatrize beschränkt ist. Vielmehr besitzt die Pelletpresse 101 gemäss Fig. 5 eine stillstehende Lochmatrize 107, wogegen ein Tellerrad 45 im Uhrzeigergegensinne angetrieben ist und einerseits die an der Innenfläche der Matrize 107 abrollenden Pressrollen 109, 110 sowie in bekannter Weise räumlich gekrümmte Leitschaufeln 111, 112 trägt, überdies aber an seinem Rande noch zwei Abstreifmesser 114, 115, die in bekannter Weise aus Blattfedermaterial gebildet sein mögen.

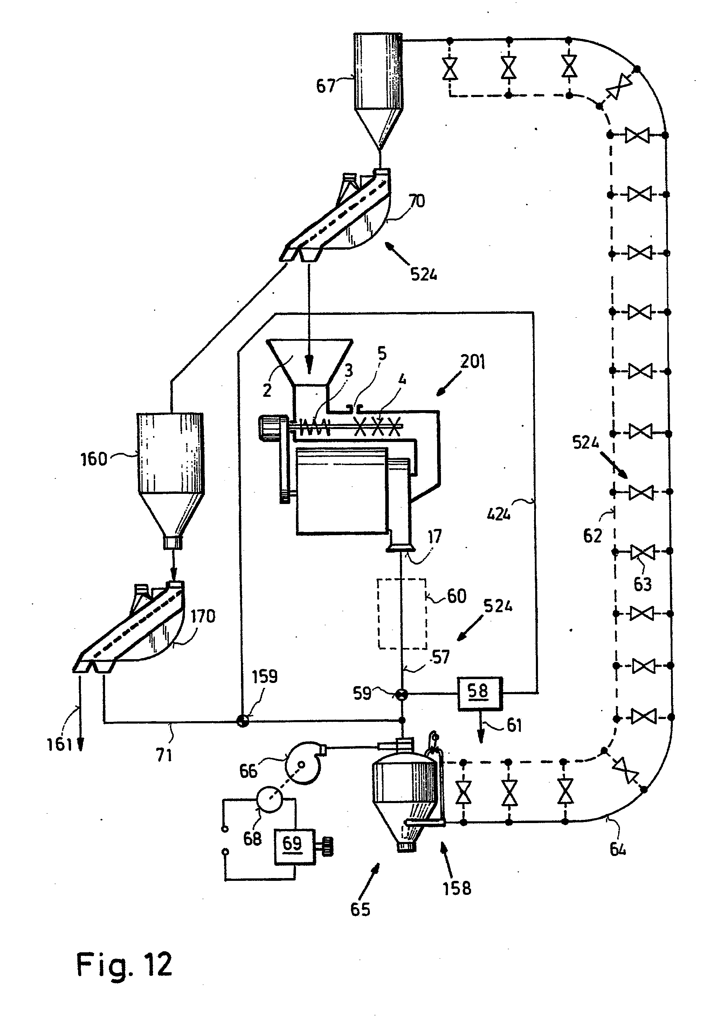

Das von den Abstreifern 114, 115 abgestreifte Material fällt an der rechten Seite (bezogen auf Fig. 5) der Lochmatrize 107 in einen Trichter 46, an dessen Grunde eine Rückführschnecke 222 vorgesehen ist. Diese Rückführschnecke 222 fördert das vom Trichter 46 aufgefangene Material in nicht dargestellter Weise nach aussen bzw. in einen aufwärts in den Einfüllschacht führenden Kanal, in dem das Material über eine beliebige Fördereinrichtung aufwärts getragen wird. Hingegen fällt das an der linken Seite der Lochmatrize abgestreifte Material direkt in den Auslass 117, wobei das Verhältnis des dem Trichter 46 zu dem dem Auslass 117 zugeführten, pelletierten Materiales gegebenenfalls mit Hilfe einer Klappe 47 einstellbar ist. Diese Klappe 47 kann mit einem Regelkreis verbunden sein, wie er später anhand der Fig. 12 besprochen wird, wobei die Verstellung der Klappe 47 in Abhängigkeit von einer Qualitätsmessung der Pelletqualität erfolgt.

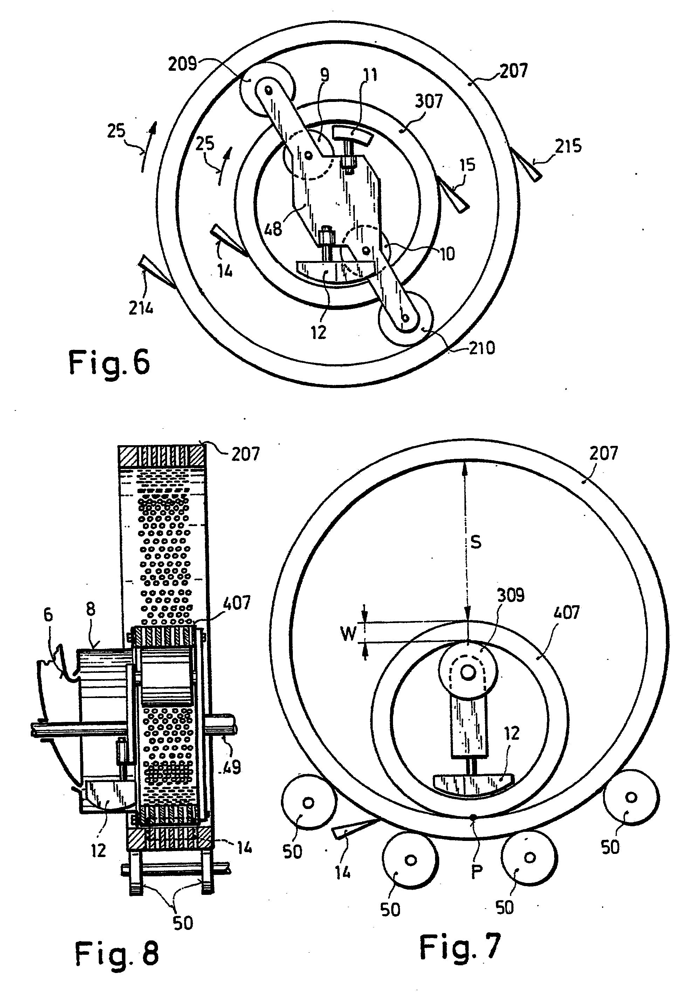

Es versteht sich, dass die Materialrückführung, wie sie an Hand der obigen drei Ausführungsbeispiele beschrieben worden ist, eine Verminderung der Gesamtleistung der jeweiligen Pelletpresse zur Folge hat, da ein Anteil der Leistung (etwa die Hälfte) für die weitere Pelletierung aufgewendet werden muss. Fig. 6 zeigt nun eine Ausführung, wie dieser Leistungsverlust vermieden werden kann, wobei zusätzlich auch der Aufwand für die Zuführanordnung für die weitere Pelletierung verringert werden kann.

Hierbei ist eine innere Matrize 307 im Prinzip ähnlich mit Pressrollen 9 und 10 sowie Leitschaufeln 11 und 12 ausgestattet, wie dies anhand der Fig. 1 bis 4 gezeigt wurde, wobei jedoch zweckmässig die Zuführung des Materiales in das Innere der Lochmatrize 307 über nicht dargestellte, gesonderte Zufuhreinrichtungen, beispielsweise entsprechend den Zufuhrschnecken 26, 126 der Fig. 3, erfolgt. Die Leitschaufeln 11, 12 können dann weiter ins Innere der Lochmatrize 307 ragen und haben dort lediglich eine Verteilfunktion. Auf diese Weise kann die Tragplatte 48 für die Pressrollen 9 und 10, sowie die Leitschaufeln 11 und 12 über die Lochmatrize 307 verlängert sein und an ihren äusseren Enden weitere Pressrollen 209, 210 tragen, die mit einer äusseren Lochmatrize 207 zusammenwirken. Jeder der beiden, zweckmässig von einem gemeinsamen Antrieb angetriebenen, Lochmatrizen 207, 307 sind zwei Abstreifmesser 14, 15 bzw. 214, 215 zugeordnet.

Das von den Messern 14, 15 abgestreifte pelletierte Material kann so unmittelbar auf die Innenfläche der äusseren Matrize 207 fallen (vereinfachte Zuführanordnung), von der es mitgenommen und den Pressrollen 209, 210 zugeführt wird. Durch diese äusseren Pressrollen 209, 210 wird das bereits einmal pelletierte Material ein weiteres Mal hindurchgepresst, wobei im Bedarfsfalle ohne weiteres auch noch ausserhalb der Lochmatrize 207 eine dritte Lochmatrize in analoger Anordnung vorgesehen sein kann. Gegebenenfalls können zwischen den beiden Matrizen 207, 307 noch entsprechende Verstreichbzw. Verteileinrichtungen (Messer, Rakeln od.dgl.) vorgesehen sein, um Materialansammlungen zu verhindern und für eine gleichmässige Materialverteilung Sorge zu tragen. An dieser Stelle sei auch erwähnt, dass es bereits bekannt ist, an Stelle von Pressrollen Verstreichbleche zu verwenden, die mit der Innenfläche der jeweiligen Lochmatrize einen spitzen Winkel einschliessen und das Material in die Löcher verstreichen bzw. drücken. Eine derartige Anordnung könnte für die äussere Matrize 207 vorgesehen sein, zumal der Raum zwischen den beiden Matrizen 207, 307 relativ beengt ist und daher die Pressrollen 209, 210 gegenüber dem Durchmesser der Lochmatrize 207 einen sehr geringen Radius besitzen. Anderseits könnte der Einzugswinkel auch dadurch verbessert werden, dass nach der Art von Raupenfahrzeugen anstelle der Pressrollen 209, 210 ein von mehreren kleineren Rollen getragenes Endlosband zum Einpressen des Materiales in die Lochmatrize 207 vorgesehen ist.

Der oben anhand der Fig. 6 erläuterte Gedanke, zwei oder mehrere ineinander angeordnete Lochmatrizen zu verwenden, kann auch gemäss den Fig. 7 und 8 abgewandelt werden. Hier ist jedoch eine exzentrische Anordnung der beiden Lochmatrizen 207, 407 vorgesehen, wobei die innere Lochmatrize 407 gleichzeitig als Pressrolle innerhalb der äusseren Lochmatrize 207 wirkt. Der Durchmesserunterschied zwischen den Lochmatrizen 207, 407 ist hier stark übertrieben dargestellt, denn in der Praxis wird es sich empfehlen, einen relativ geringfügigen Durchmesserunterschied zu wählen, so dass der maximale Freiraum s zwischen den beiden Lochmatrizen 207, 407 nur etwa der doppelten bis dreifachen Dicke w der Matrize 407 (bzw. ihrer Lochlänge) entspricht.

Innerhalb der inneren Matrize 407 können wiederum mehrere Pressrollen vorgesehen sein, doch kann es sich als nützlich erweisen, zumindest an der dem Berührungspunkt P der beiden Lochmatrizen 207, 407 gegenüberliegenden Stelle eine Pressrolle 309 vorzusehen, um so die auf die innere Matrize 207 wirkenden Kräfte zu vergleichmässigen bzw. auszugleichen.

Wie besonders Fig. 8 zeigt, wird das Material über den Einfüllschacht 6 dem mit der Matrizenform 407 mitdrehenden Matrizendeckel 8 zugeführt, wo es sich unter der Wirkung der Fliehkraft über die Innenfläche des Deckels 8 verteilt, und dann von der Leitschaufel 12 abgestreift wird. Die Leitschaufel 12 führt dann das Material in das Innere der Matrize 407, sperrt dagegen aufgrund ihrer Lage an der Unterseite der Matrize 407 den Materialzustrom bei Stillstand der Matrize. Das in die Matrize 407 eingebrachte Material wird schliesslich von der Pressrolle 309 durch die Löcher der Matrize 407 hindurchgepresst, worauf das ausgepresste Material bei weiterer Drehung der Matrize 407 gegen die Innenfläche der Matrize 207 gedrückt wird, durch deren Löcher es hindurchgepresst und schliesslich vom Messer 14 abgestreift wird. Die äussere Matrize 207 wird dabei entweder durch den über eine Welle 49 erfolgenden Antrieb der Innenmatrize 407 mitgenommen und braucht daher nur mehr abgestützt werden, oder erhält einen eigenen Antrieb über die Abstützräder 50, in welchem Falle gegebenenfalls ein gesonderter Antrieb der Innenmatrize 407 entfallen kann. Um ein Zurückdrücken des Materiales durch die Löcher der Innenmatrize 407 zu verhindern, kann im Bereiche des Berührungspunktes P auch an der Innenseite der Matrize 407 eine entsprechende Pressvorrichtung, z.B. ein oder zwei Pressrollen, vorgesehen sein. Bevorzugt ist aber eine Anordnung der Pressrollen, bei der die Achsen zweier solcher Rollen zu beiden Seiten der Drehachse der Innenmatrize 407 etwa an einer horizontalen Ebene liegen. Versuche haben gezeigt, dass diese Anordnung kräftemässig am günstigsten ist.

Der Antrieb der äusseren Matrize 207 (falls ein solcher vorhanden sein soll) erfolgt zweckmässig an deren Rand, wie dies aus Fig. 8 ersichtlich ist. Hierbei kann der Antrieb in Form eines blossen Reibradantriebes erfolgen, wie dies bei grossen Rohrmühlen durchgeführt wird, es können aber auch Zahnkränze vorgesehen sein. Gerade im Falle eines Reibradantriebes mag es zweckmässig sein, die den Antriebsrädern 50 gegenüberliegenden Flächen der Matrize 207 auf einem anderen Durchmesser anzuordnen, als die die Perforationslöcher tragende Aussenfläche, um so Verschmutzungen der Antriebsfläche durch das pelletierte Material zu vermeiden. Gewünschtenfalls können auch entsprechende Abschirmungen (Bleche od. dgl.) vorgesehen sein. In der Regel wird es aber ausreichend und am zweckmässigsten sein, die Laufflächen der Aussenmatrize, an der die Antriebsräder 50 abrollen, an einem geringeren Radius als die gelochte Aussenfläche anzuordnen.

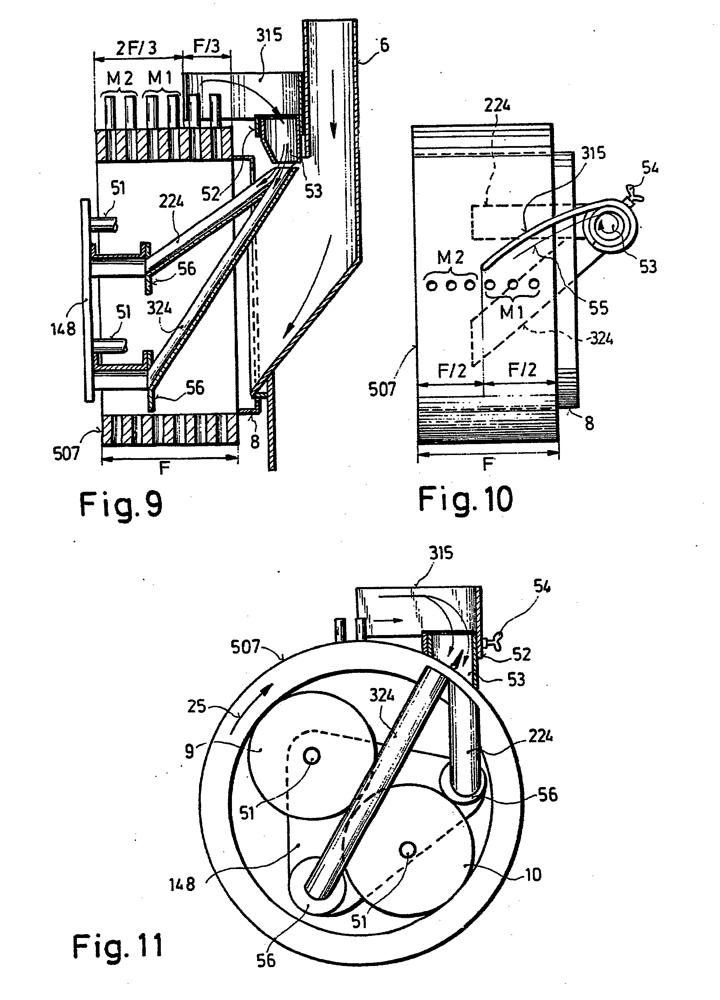

Das Prinzip einander benachbarter Matrizenflächen, das oben anhand der Figuren 6 bis 8 anhand von in radialer Richtung einander benachbarten Matrizen 207 bis 407 erläutert wurde, kann auch durch in axialer Richtung benachbarte Matrizenflächen verwirklicht werden, wie dies nachstehend anhand der Figuren 9 bis 11 erläutert wird.

Hierbei ist eine Ringmatrize 507 gemäss Fig. 11 im Uhrzeigersinne (Pfeil 25) zur Drehung angetrieben, wobei der entsprechende Antrieb nicht dargestellt ist und analog zur Ausführung nach den Figuren 1 und 2 ausgebildet sein kann. Im Inneren dieser Matrize 507 sind wiederum die Pressrollen 9, 10 drehbar, deren Achsen 51 von einer ortsfesten Platte 148 gehalten sind. Die Platte 148 mag in bekannter Weise zusätzlich abgestützt sein. Weitere in an sich bekannter Weise vorhandene, jedoch nicht dargestellte Teile, mögen von entsprechenden Leitschaufeln bzw. einem Abstreifmesser für das fertige Produkt entsprechend dem Abstreifmesser 14 gebildet sein.

Die in Fig. 9 der Uebersichtlichkeit halber weggelassenen, jedoch sich in üblicher Weise über die gesamte axiale Breite der Matrize 507 erstreckenden Pressrollen 9, 10 wirken somit in bekannter Weise mit der gesamten gelochten Innenfläche der Matrize 507 zusammen. Dagegen ist die Matrizenfläche F in der Stellung des Abstreifers 315 gemäss Fig. 9 in einen Streifen 2F/3 und einen Streifen F/3 unterteilt, in der Stellung gemäss Fig. 10 jeweils in einen Streifen F/2. Zum Zwecke dieser Verstellbarkeit ist der Abstreifer 315 mit einem Rohrstutzen 52 (Fig. 9, 11) versehen, der an einem mit dem Einfüllschacht 6 verbundenen Trichterrohr 53 in jede beliebige Stellung bringbar und beispielsweise mittels einer Flügelschraube 54 festklemmbar ist. Selbstverständlich ist es auch möglich, Rasten für bestimmte Einstellungen vorzusehen. Somit kann der Abstreifer 315 gewünschtenfalls auch in eine Ruhelage gebracht werden, in der er die Fläche F der Matrize 507 nicht überstreicht. Da der Abstreifer 315 durch einem Rohrstutzen 52 geführt ist, ist er auch leicht höhenverstellbar.

Unmittelbar unter dem Trichterrohr 53 sind, gegebenenfalls als offene Rutschen ausgebildete, Schrägschächte 224, 324 vorgesehen, die das vom Abstreifer 315 abgestreifte und in das Trichterrohr 53 hineinbeförderte Material den Pressrollen 9, 10 zuführen. Die Zuführung erfolgt gemäss den Figuren 9 und 10 allerdings jeweils so, dass das Material auf einen vom Abstreifer 315 nicht überstrichenen Flächenstreifen der Matrize 507 gelangt, so dass das an diesem Streifen austretende pelletierte Material M2 einer zweifachen Pelletierung unterworfen wurde, das Material Ml nur einer einfachen. Gegebenenfalls kann es erwünscht sein, eine Mischung beider Materialien Ml, M2 herzustellen, und dies geschieht bei einer Stellung des Abstreifers 315 gemäss Fig. 9 das Material Ml in der Mitte wird dann an anderer Stelle von einem nicht dargestellten Abstreifer abgenommen. Soll hingegen das gesamte Material einer doppelten Pelletierung unterworfen werden, so ist die Einstellung des Abstreifers 315 gemäss Fig. 10 zu wählen. Das Material Ml, das über den Einfüllschacht 6 zugeführt und auf dem diesem Schacht 6 benachbarten Flächenstreifen von den Pressrollen ausgepresst wurde, trifft dabei auf den Abstreifer 315, wobei sich aufgrund der hohen Umfangsgeschwindigkeit der Matrize 507 eine Flugbahn gemäss dem Pfeil 55 (Fig. 10) für das Material Ml ergibt. Gewünschtenfalls können aber auch zusätzliche Führungseinrichtungen vorgesehen sein. Das so vom Abstreifer 315 abgefangene Material M1 wird nun über die Schrägschächte 224, 324 dem linken Streifen (bezogen auf die Figuren 9 und 10) zugeführt, und so ein weiteres Mal mit Hilfe der Pressrollen 9, 10 pelletiert. Dieses doppelt pelletierte Material M2 wird dann vom nicht dargestellten Abstreifmesser 14 (vgl. die vorigen Figuren) abgestreift. Soll dagegen nur einfach pelletiertes Material hergestellt werden, so wird der Abstreifer 315 entweder gänzlich abgenommen oder in eine Lage gebracht, in der er im wesentlichen parallel zu den Ebenen der Stirnflächen der Matrize 507 bzw. des Matrizendeckels 8 steht.

Um entsprechend der Einstellung des Abstreifers 315 auch eine Verstellung der Schrägschächte 224, 324 vornehmen zu können, sind diese zweckmässig auswechselbar an der Platte 148 befestigt. Die damit verbundenen Trennwände 56, namentlich im unteren Bereich der Matrize 507, sind in der dargestellten Ausführung (Fig. 11) im wesentlichen scheibenförmig ausgebildet, erstrecken sich jedoch vorzugsweise ähnlich der Leitschaufel 12 (vgl. Fig. 1) über einen relativ grossen Bereich, um zu verhindern, dass das erstmalig zu pelletierende Material auf den Flächenstreifen für das zum zweiten Mal zu pressende, bereits pelletierte Material gelangt. Anstelle einer Auswechselbarkeit der Schrägschächte 224, 324 können sie gewünschtenfalls auch teleskopisch zusammenschiebbar aus einzelnen Rinnenschüssen sein. Ebenso muss allerdings auch die Befestigung an der Platte 148 (oder einer anderen ortsfesten Befestigungsmöglichkeit) verstellbar sein.

Es versteht sich, dass anstelle einer einzigen Matrize 507 gegebenenfalls auch zwei oder mehr in Axialrichtung einander mehr oder weniger benachbarte Lochmatrizen angeordnet sein können. Ebenso versteht es sich, dass anstelle der in den bisherigen Ausführungsformen gezeigten Rückführanordnungen auch Zuführanordnungen zu einer anderen Pelletpresse vorgesehen sein können, insbesondere wenn für die erste und zweite Pelletierbehandlung unterschiedliche Lochgrössen gewünscht werden, obwohl es auch möglich wäre, beispielsweise unterschiedliche Lochgrössen in den Flächenstreifen 2 F/3 und F/3 vorzusehen. Ueberdies ist das anhand der Figuren 7 und 8 gezeigte Antriebsprinzip über den Aussenumfang einer Matrize gewünschtenfalls selbstverständlich auch bei den übrigen Ausführungen möglich, ebenso wie es denkbar ist, den Antrieb an den Innenumfang der Matrize zu verlegen. Gerade für eine mehr als zweifache Verpressung kommen auch Kombinationen von radial und axial einander benachbarten Matrizenflächen entsprechend einer Kombination einer Ausführung gemäss den Fig. 6, 7 oder 8 mit einer Ausführung gemäss den Fig. 9 bis 11 in Betracht. Ebenso ist es denkbar, Matrizen verschiedenen Durchmessers (falls dies aus irgendwelchen Gründen erforderlich sein sollte) in der Art der Fig. 9 bis 11 axial nebeneinander anzuordnen. Schliesslich sei auch noch darauf hingewiesen, dass bei in Ruhestellung befindlichen Abstreifer 315 praktisch beide Flächenstreifen (d.i. also die Gesamtfläche F der Matrize 507) gewissermassen "im Parallelbetrieb" arbeiten, und dass ein solcher Parallelbetrieb prinzipiell auch im Falle der Fig. 6 bis 8 möglich ist, wobei lediglich dafür Sorge zu tragen ist, dass auch die äussere Matrize 207 eine entsprechende Materialzufuhr erhält und das von den Messern abgestreifte Material jeweils gesondert abgeführt wird.

Es sei daran erinnert, dass wenigstens eine der Wirkungen und Aufgaben des mehrfachen Pelletierens in einer angestrebten Qualitätsverbesserung des Endproduktes liegt. Es versteht sich, dass die zweifache Pelletierung mit einem erhöhten Energiebedarf für den doppelten Arbeitsvorgang verbunden ist. Anhand der Fig. 12 soll nun erläutert werden, wie der Energiebedarf gesenkt werden kann.

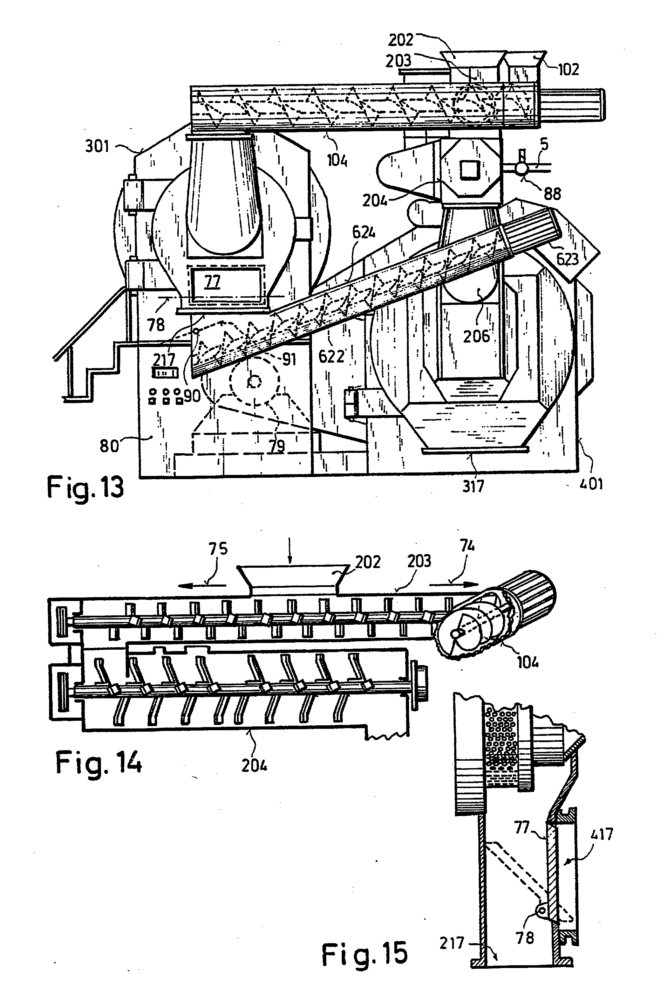

In dem in Fig. 12 gezeigten Muhlendiagramm ist eine Pelletpresse 201 mit einer Dosierschnecke 3 und einem Mischer 4 vorgesehen, die beispielsweise an einer gemeinsamen Welle angeordnet sind. Dampf kann über einen Einlass 5 zugeführt werden. Vom Ausgang 17 der Pelletpresse 201 gelangt das pelletierte Produkt in eine Transportleitung 57, die die Pellets einer Qualitätsprüfeinrichtung 58 allgemeiner Art oder einer besonders ausgebildeten Qualitätsprüfeinrichtung 158 zuführt. Hierzu ist eine Umschalteinrichtung 59 als ZweiWege-Ventil schematisch angedeutet, doch wird dieses Ventil 59 in der Praxis so ausgebildet sein, wie dies später anhand der Fig. 15 erläutert werden wird. Innerhalb der Leitung 57 kann gewünschtenfalls eine Kühleinrichtung 60 zwischengeschaltet sein.

Die Qualitätsprüfeinrichtung 58 kann auf eine der in der EP-OS 40 406 beschriebenen Weisen oder gemäss dem Stande der Technik hiezu ausgebildet sein. Im Endeffekt wird am Ausgange der Qualitätprüfeinrichtung 58 das einem Soll-Standard entsprechende pelletierte Material an einer Ausgangsleitung 61 anfallen und von dort der weiteren Verwendung zugeführt werden, wogegen Kleinteile, Bruchstücke bzw. den Qualitätsanforderungen nicht entsprechendes pelletiertes Material über eine Rückführanordnung 424 zur Pelletpresse 201, und zwar in diesem Fall vorzugsweise zwecks nochmaliger Konditionierung in den Einlasstrichter 2 zurückgeführt wird.

Bevorzugt wird jedoch anstelle einer beliebigen Qualitätsprüfeinrichtung 58 eine pneumatische Qualitätsprüfeinrichtung 158 verwendet. Im Prinzip kann es dabei um eine solche handeln, wie sie in der EP-OS 95 168 beschrieben ist, wobei es sich im wesentlichen um eine pneumatische Leitung mit darin vorgesehenen Schikanen handelt. Die Schikanen können dabei einfach von Rohrkrümmern gebildet sein. Je nach der Empfindlichkeit des verwendeten Materiales, insbesondere bei Weglassung eines Kühlers 60 in der Leitung 57, kommt auch ein Langsamförderer (Pfropfenförderer) in Frage, der beispielsweise, wie bekannt, eine strichliert angedeutete Nebenleitung 62 mit darin vorgesehenen Ventilen 63 enthalten kann, über die Luft in die das Produkt führende Hauptleitung 64 eingeblasen wird, um das Produkt in einzelne Pfropfen zu unterteilen und am Transport dieser Pfropfen mitzuwirken. Dabei ist zur Einspeisung des pelletierten Materiales aus der Leitung 57 in die Pneumatikleitung 64 ein bekannter Einspeisapparat 65 vorgesehen, der in beliebiger, an sich bekannter Weise konstruiert sein kann und nicht unbedingt in der dargestellten Weise ausgebildet sein muss. Diesem Einspeisapparat wird Druckluft von einem Gebläse 66 zugeführt, wodurch das aus der Leitung 57 auf den Grund des Apparates fallende Gut in die in diesem Bereiche angeordnete Mündung der Leitung 64 hineingedrückt wird. Gleichzeitig wird in bekannter Weise Luft von der Oberseite des Apparates in die Nebenleitung 62 eingespeist.

Hier mögen die natürlich vorkommenden Rohrkrümmer bzw. die Reibung an den Rohrwänden zur Beanspruchung des Materiales beizutragen, so dass Material ungenügender Qualität zerfällt, wogegen Material, das den Anforderungen entspricht, unversehrt in einen Zyklonabscheider 67 gelangt. Der Vorteil der Verwendung einer pneumatischen Qualitätsprüfeinrichtung 158 liegt darin, dass so auch eine gewisse Kühlung des pelletierten Materiales erzielt wird, wodurch die Qualitätsprüfung leichter möglich ist. Deshalb ist es bevorzugt, wenn allfällige Schikanen, Rohrkrümmer u.dgl. erst ab der zweiten Hälfte der Länge der Leitung 64 vorgesehen sind (mit Ausnahme der Anfangsrohrkrümmung im Einspeisapparat 65).

Zur Anpassung an verschiedene Qualitätsanforderungen lässt sich ja im allgemeinen die Leitung 64 nicht beliebig verlängern oder verkürzen, obwohl dies gegebenenfalls auch denkbar wäre. Eine einfache Möglichkeit zur Anpassung der Soll- Qualität besteht darin, dass das Gebläse 66 von einem Motor 68 einstellbarer Geschwindigkeit angetrieben wird, wobei zur Einstellung der Geschwindigkeit des Motors 68 bzw. zur Anpassung der gewünschten Soll-Qualität eine Einstelleinrichtung 69 vorgesehen ist.

Am Ausgange des Zyklons 67 gelangt das geprüfte Material in eine Separiereinrichtung 70, die vorzugsweise, wie dargestellt von einem Sieb gebildet ist. Die Separiereinrichtung 70 bildet praktisch einen Bestandteil der gesamten Prüfeinrichtung 158, wobei im Falle der Qualitätsprüfeinrichtung 58 die Separiereinrichtung mit integriert sein kann und daher dann keinen getrennten Bauteil bildet. Das Sieb 70 ist verhältnismässig grobmaschig, so dass unversehrte Pellets an der Oberfläche bleiben und abgestossen werden, wogegen Bruchstücke und Kleinteile hindurchfallen und dem Einlasstrichter 2 zugeführt werden. Der Siebabstoss gelangt in einen Kühler 160, soferne das pelletierte Material nicht in der Pneumatikleitung 64 bzw. dem Zyklon 67 bereits genügend abgekühlt ist, wodurch ein gesonderter Kühler 160 entfallen kann. Ist jedoch ein Kühler 160 (bekannter Bauart) vorgesehen, so wird es zweckmässig sein, dem Kühler 160 ein weiteres Sieb 170 nachzuschalten, dessen Siebabstoss in eine Ausgangsleitung 161 geführt wird, die gegebenenfalls anschliessend mit der Leitung 61 vereinigt wird und zu einem Silo für das Fertigprodukt oder einer anderen Verwendung führt. Bruchstücke und Feinanteile hingegen werden in eine Leitung 71 eingespeist. Die Leitung 71 führt das Material ungenügender Qualität entweder direkt in den Einfülltrichter 2 zurück, oder über den Einspeisapparat 65, doch ist die erste Variante vorzuziehen. Falls man jedoch die Wahlmöglichkeit haben will, kann ein Umschaltventil 159 (entsprechend dem Ventil 59) vorgesehen sein.

Dadurch, dass die Rückführleitung 424 oder die aus dem Leitungszug 57, 62 bis 65, 67 und 70 bestehende Rückführanordnung 524 nur mehr jenen Teil zurückführt, der den Qualitätsanforderungen nicht entspricht, kann der Energieaufwand für jenen Anteil des pelletierten Materiales eingespart werden, der bereits der Soll-Qualität entspricht und daher nicht mehr ein weiteres Mal einer Pelletierbehandlung unterzogen zu werden braucht.

Obwohl der konstruktive Aufwand bei den vorher besprochenen, für die mehrfache Pelletierung des Materiales besonders auslegte Verwirklichungsform relativ gering ist und überdies es beispielsweise bei einer Ausführung gemäss Fig. 4 relativ leicht ist, im Falle einer erwünschten nur einfachen Pelletierung das gesamte Schneckengehäuse 121 zu entfernen und die Kette 28 abzunehmen, wie auch beispielsweise die Ausführung nach Fig. 6 durch Wegnahme der Aussenmatrize 207 und der Rollen 209, 210 leicht als Einfach-Pelletiervorrichtung betrieben werden kann, so ist doch nicht zu übersehen, dass für derartige besondere Konstruktionen sich die Nachfrage gegebenenfalls auf eine geringere Stückzahl beschränken wird. Anhand der Figuren 13 bis 16 soll nun eine Konstruktion beschrieben werden, bei der im wesentlichen ohne grosse baulichen Veränderungen Standardbauteile verwendet werden können, die jeweils für sich sowohl für die einfache Pelletierung als auch für eine mehrfache anwendbar sind.

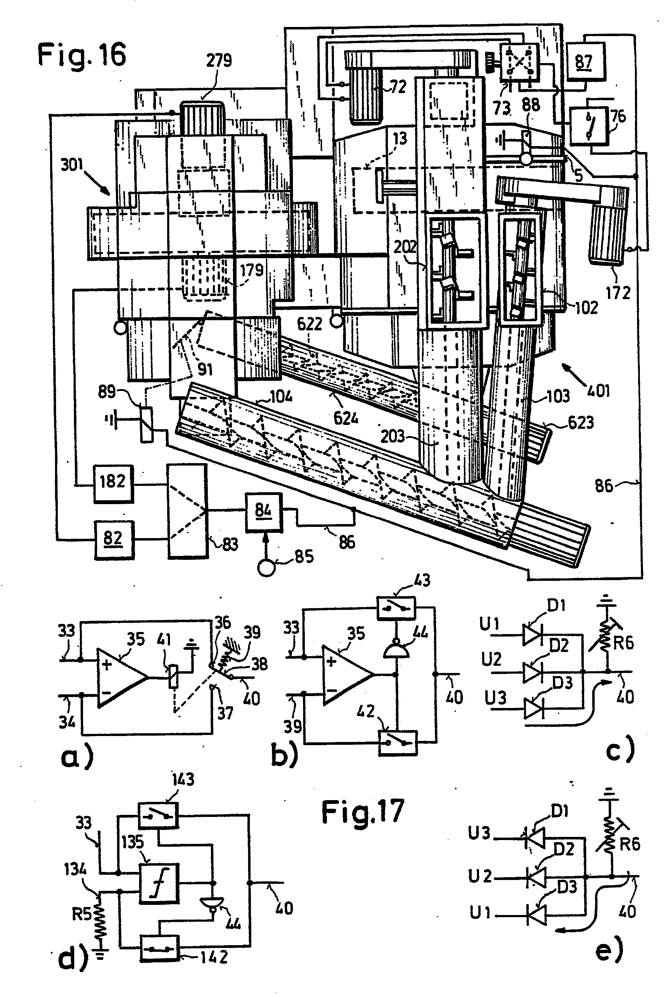

Dabei besteht die Konstruktion im wesentlichen aus zwei an sich voneinander unabhängigen Pelletpressen 301, 401 (Fig. 13, 16), die jede für sich für die einfache Pelletierung anwendbar sind. Diese beiden Pelletpressen 301, 401 sind nun in einer verhältnismässig raumsparenden Weise Seite an Seite mit zueinander parallelen Drehachsen zusammengeschaltet, wobei der Mischer 104 der Pelletpresse 301 que gestellt ist und an den Dosierapparat 203 der Pelletpresse 401 anschliesst. Dieser Dosierapparat 203 erhält das Rohmaterial in an sich bekannter Weise über einen Einfülltrichter 202.

Das über den Mischer 104 der Pelletpresse 301 zugeführte konditionierte Rohmaterial wird in der Pelletpresse 301 ein erstes Mal (oder bereits ein weiteres Mal, wenn schon eine Pelletierbehandlung voranging) zu Pellets verpresst, wobei die am Ausgange 217 anfallenden Pellets mit Hilfe einer Zuführranordnung 624 dem Einfüllschacht 206 der Pelletpresse 401 zugeführt werden können. Die Zuführranordnung 624 mag dabei wiederum eine Förderschnecke 622 aufweisen, die über einen Motor 623 antreibbar ist.

Das in der Pelletpresse 301 bereits pelletierte und über die Zuführanordnung 624 der Pelletpresse 401 zugeführte Material wird in der letzteren Presse ein weiteres Mal einer Pelletierbehandlung unterzogen und verlässt die Pelletpresse 401 an deren Ausgang 317.

Soll anstelle eines solchen Serienbetriebes, bei dem die Pelletpresse 301 der Pelletpresse 401 vorgeschaltet ist, für andere Ausgangsmaterialien eine einfache Verpressung vorgenommen werden, so lässt sich die dargestellte Anlage hierfür ebenfalls verwenden. Hierzu sei zunächst auf Fig. 14 eingegangen. Diese Figur zeigt den Speiseapparat 203 und den darunter liegenden Mischer 204 der Pelletpresse 401. Der aus Fig. 16 ersichtliche Antriebsmotor 72 für die Paddelschnecke des Dosierapparates 203 ist mit Hilfe einer Drehumkehrstufe 73 in beiden Drehrichtungen betreibbar. In der einen Drehrichtung wird gemäss Fig. 14 das Material über den etwa in der Mitte des Dosierapparates 203 angeordneten Einfülltrichter 202 im Sinne des Pfeiles 74 dem Schneckenmischer 104 zugeführt. Somit gelangt dann das Material nacheinander durch die Pelletpressen 301, 401. Im Parallelbetrieb dagegen wird mit Hilfe der Umkehrstufe 73 (Fig. 16) die Drehrichtung des Motors 72 umgekehrt, und der Dosierapparat 203 fördert das vom Einfülltrichter 202 kommende Material in Richtung des Pfeiles 75 (Fig. 14) dem Mischer 204 zu.

Somit würde der Schneckenmischer 104 ohne Zufuhr bleiben, weshalb für diesen Fall ein weiterer Einfülltrichter 102 mit einem weiteren Speiseapparat 103 verbunden ist. Dieser Speiseapparat 103 mündet gemäss Fig. 16 in den Mischer 104. Es ist aus Fig. 16 ersichtlich, dass die Umkehrstufe 73 über eine Ausgangsleitung mit einer Schaltstufe 76 verbunden ist, so dass bei Umschaltung auf Serienbetrieb, d.h. bei einer dem Pfeil 74 (Fig. 14) entsprechenden Drehrichtung des Motors 72 (Fig. 16), automatisch die Stromzufuhr für den Antriebsmotor 172 des Speiseapparates 103 unterbrochen ist. Im übrigen sei erwähnt, dass hier die Mischer 104, 204 unterschiedlich ausgebildet sind, selbstverständlich aber auch gleichartig auf an sich beliebige Weise ausgebildet sein können.

Es ist klar, dass hinsichtlich der Speisung verschiedene Varianten möglich sind. Beispielsweise kann an Stelle zweier Speiseapparate 103, 203 ein einziger vorgesehen sein, der jedoch die Kapazität zum Speisen zweier Pelletpressen 301, 401 aufweist und dessen Ausgang derart umschaltbar ist, dass er wahlweise für den Serienbetrieb nur mit dem Mischer 104 verbunden ist, für den Parallelbetrieb hingegen beide Mischer 104, 204 beschickt Zu diesem Zwecke kann der Motor 72 ein polumschaltbarer Motor sein, der bei Serienbetrieb auf eine geringere Geschwindigkeit geschaltet ist, so dass die an sich überdimensionierte Leistung des gemeinsamen Speiseapparates entsprechend vermindert wird bzw. wird im Falle des Parallelbetriebes, bei dem beide Mischer 104, 204 an den Ausgang des gemeinsamen Speiseapparates angeschlossen sind, der entsprechende Antriebsmotor für den Speiseapparat mit der höheren Geschwindigkeit betrieben. Hierbei kann es zweckmässig sein, wenn das Verhältnis der im Parallelbetrieb den beiden Pelletpressen 301, 401 vom gemeinsamen Speiseapparat zugeführten Mengen einstellbar, insbesondere aber in Abhängigkeit von der Motorleistung (Stromaufnahme) wenigstens einer der Pressen 301, 401 geregelt ist. Die Regelung kann dabei mit Hilfe eines Extremwert-Selektors analog zur später beschriebenen Regelung durchgeführt werden. Ferner kann gewünschtenfalls nur eine der Pressen 301 oder 401 betrieben werden, wobei beispielsweise der Schalter 76 unterbrochen bleibt.

Damit der Ausgang des gemeinsamen Speiseapparates leichter an den Mischer 204 anschliessbar ist, kann dieser in zwei Stufen ausgeführt sein, wie dies beispielsweise aus der US-PS 4 001 452 bekannt geworden ist, wobei die obere Stufe des Speiseapparates ihren Einlass an der dem Mischer 104 zugekehrten Seite hat, diese obere Stufe dann am linken Ende (bezogen auf Fig. 14) in eine untere Stufe fördert, die entsprechend dem Mischer 204 ausgerichtet ist. Auf diese Weise kann der Ausgang und der Eingang des gemeinsamen Speiseapparates an derselben Seite liegen und dem Mischer 104 zugekehrt sein. Im Falle des Stillstandes des Motors 172 mag gleichzeitig ein Siloverschluss die weitere Materialzufuhr zum Trichter 102 unterbinden.

Im Parallelbetrieb der beiden Pelletpressen 301, 401 muss selbstverständlich für die Pelletpresse 301 ein zum Ausgang 317 der Pelletpresse 401 parallel liegender Ausgang geschaffen werden. Zu diesem Zwecke kann die Zuführanordnung 624 im Anschluss an den Ausgang 217 eine entsprechende verschliessbare Klappe aufweisen, doch kann dabei die Förderschnecke 622 stören und müsste deshalb so verkürzt werden, dass sie nicht bis zum linken Ende des Kanales 624 reicht. Günstiger ist die aus den Fig. 13 und 15 ersichtliche Lösung, bei der eine Offnung 417 durch eine Klappe 77 verschliessbar ist. Diese Klappe 77 ist um eine Achse 78 schwenkbar und kann in die aus Fig. 15 ersichtliche strichlierte Lage gebracht werden, in der sie die mit der Zuführanordnung 624 verbundene Auslassöffnung 217 versperrt und die Auslassöffnung 417 frei gibt. Auf diese Weise können die Pelletpressen 301, 401 wahlweise in Serie oder parallel betrieben werden, so dass für die mehrfache Pelletierbehandlung keine Sonderkonstruktionen erforderlich sind und überdies die Pelletpressen 301, 401 für einen wahlweisen Parallelbetrieb besser ausgenützt werden können.

Wie anhand der Darstellung der Fig. 13 leicht ersichtlich ist, können beide Pelletpressen 301, 401 ohne weiteres von einem gemeinsamen Motor 79 angetrieben sein. Es ist aber ebenso möglich, gemäss der Darstellung der Fig. 16 zwei Motoren 179, 279 vorzusehen, die mit Bezug auf Fig. 13 hintereinander fluchtend angeordnet sein mögen. In einem unterhalb der Pelletpresse 301 angeordneten Steuerschrank 80 können dann die bereits beschriebenen Steuerstufen 73, 76 sowie die Elemente des nachstehend beschriebenen Regelkreises untergebracht werden.

Beim Betrieb zweier hintereinander geschalteter Pelletpressen 301, 401 ist es beinahe unvermeidlich, dass die beiden Pressen zu verschiedenen Zeiten unterschiedlich belastet werden. So wird zu Beginn des Betriebes das über den Einfülltrichter 202, den Dosierapparat 203 und den Mischer 104 zugeführte Material zunächst lediglich die Pelletpresse 301 belasten, wogegen die Pelletpresse 401 leer mitläuft, soferne man nicht den Aufwand scheut, den Motor 279 für den Antrieb des Antriebrades 13 der Pelletpresse 401, z.B. über einen an der Zuführanordnung 624 angebrachten Fühler, erst dann anlaufen zu lassen, wenn das Material bereits dem Einfüllschacht 206 (Fig. 13) zugeführt wird, was gegebenenfalls auch durch eine Verzögerungseinrichtung vorbestimmter Zeitkonstante geschehen kann. Analog mag der Fühler (oder die Verzögerungseinrichtung) ein Abschalten der Pelletpresse 301 beim Auslaufen derselben bewirken, wenn die Pelletpresse 301 bereits leer läuft, die Pelletpresse 401 jedoch noch zu arbeiten hat. Auch während des Betriebes ergibt sich aufgrund von Regelschwankungen und unterschiedlich zugeführten Mengen jeweils eine unterschiedliche Belastung der beiden Pressen 301, 401.

Würde man nun eine von der Belastung beider Motoren 179, 279 gleichzeitig beeinflusste Regelung vorsehen, so ergäbe sich aus einer maximalen Belastung der einen Pelletpresse, während die andere leer läuft, eine Verfälschung, die einem optimalen Betrieb abträglich ist. Vorzugsweise ist daher eine Messanordnung für die jeweilige Leistung der beiden Pelletpressen 301, 401 vorgesehen, die an sich beliebig ausgebildet sein kann, zweckmässig jedoch einfach in einer Messeinrichtung 82 bzw. 182 für die Stärke des von den Motoren 179, 279 aufgenommenen Stromes besteht. Derartige Messanordnungen sind an sich bekannt und brauchen daher im einzelnen nicht beschrieben zu werden. Die Ausgangssignale der beiden Messeinrichtungen 82, 182 werden nun einem Extremwert-Selektor 83 zugeführt, der nur jeweils dasjenige Signal zu einem Regelkreis 84 hindurch lässt, das der grösseren Leistung entspricht. In der Praxis wird daher der Extremwert-Selektor 83 ein Maximalwert-Selektor sein, doch wäre es selbstverständlich denkbar, zwischen die Messeinrichtungen 82 bzw. 182 und den Extremwert-Selektor 83 eine Inverterstufe zwischenzuschalten, so dass der Extremwert-Selektor 83 als Minimalwert-Selektor betrieben würde. Der Aufbau eines solchen Extremwert-Selektors 83 ist an sich bekannt und sei zum besseren Verständnis später anhand der Varianten a) bis e) der Fig. 17 später besprochen. Der Regelkreis 84 erhält ein Sollwert-Signal von einem Sollwert-Geber 85 und gibt an seinem Ausgang ein entsprechendes Regelsignal an eine Ausgangsleitung 86 ab. In Fig. 16 ist diese Ausgangsleitung 86 als blosse Linie dargestellt, kann jedoch wegen der unterschiedlichen Art der zu betätigenden Stellglieder auch verschiedene Umformstufen für das Signal aufweisen. Eine derartige Umformstufe 87 ist in den Stromkreis des Speisemotors 72 geschaltet und als Motoransteuerstufe bekannter Art ausgebildet.

Demnach wird die Speisung jeweils daran angepasst, welche der beiden Pelletpressen 301, 401 gerade ihre Maximalleistung erreicht hat. Da für die Anpassung der Leistung des Speisemotors 72 an die Maximalleistung der Pelletpresse 301 oder 401 unterschiedliche Zeitkonstanten massgeblich sind, kann die Regelung 84 zusammen mit dem Selektor 83 ein unterschiedliches Regelverhalten mit verschiedenen Zeitkonstanten aufweisen, je nach dem, ob das vom Selektor 83 durchgelassene Messsignal von der Messeinrichtung 82 oder 182 kommt.

Prinzipiell sind aber alternativ oder kumulativ verschiedene andere Regelungen ebenso möglich. So kann über die Leitung 86 ein Magnetventil 88 in der Dampfzuführleitung 5 eingestellt werden, so dass die Viskosität, die Temperatur und/oder der Stärkeaufschluss des den Pelletpressen 301, 401 zugeführten Materiales verändert wird. Eine weitere Möglichkeit besteht einfach darin, dass mit Hilfe eines Antriebelementes 89, z.B. eines Solenoids, eine um eine aus Fig. 13 ersichtliche mittlere Achse 90 drehbare Klappe 91 (in Fig. 16 lediglich angedeutet) in die aus Fig. 13 ersichtliche Schräglage bringbar ist, in der eine Oeffnung der Zufuhranordnung 624 freigegeben und ein Teil des aus dem Auslass 217 kommenden Materiales nach aussen abgeführt wird. Dieses abgeführte Material kann beispielsweise einer weiteren Pelletpresse zugeführt werden.

Es versteht sich, dass die Regeleinrichtung 84 verschiedene Stellglieder nach verschiedenen Gesetzen betätigen kann, wie es für die Zwecke der einfachen Pelletierung beispielsweise aus den US-PSen 2 700 940 oder 4 183 675 schliesslich aber auch aus den PCT-Veröffentlichungen WO 81/02238 oder WO 81/03076 bekannt geworden ist.

Zum besseren Verständnis soll nun die Funktion der Selektor- oder Auswahleinrichtung 83 anhand verschiedener Ausführungsmöglichkeiten gemäss Fig. 17 erläutert werden. Von den fünf in Fig. 17 schematisch gezeigten Ausführungsvarianten für die Auswahlschaltung 83 zeigt die Variante a) eine Ausführung, bei der über zwei Eingangsleitungen 33, 34 je einer von zwei miteinander zu vergleichenden bzw. auszuwählenden Messwerten herangeführt wird. An die Eingangsleitungen 33, 34 ist eine Komparatorstufe 35 angeschlossen, die von einem Differenzverstärker mit hohem Verstärkungsfaktor gebildet ist.

Mit den Eingangsleitungen 33, 34 sind auch zwei Kontakte 36, 37 verbunden. Die Schaltzunge 38 eines Umschalters liegt unter der Wirkung einer Feder 39 normalerweise am Kontakt 36, so dass das Signal aus der Eingangsleitung 33 über den Kontakt 36 unmittelbar in die Ausgangsleitung 40 gelangen kann. Dies erfolgt jedoch nur so lange, als der über die Eingangsleitung 33 herangeführte Messwert kleiner als derjenige der Leitung 34 ist. Unterschreitet hingegen das Messwertsignal in der Leitung 34 nur um ein Geringes dasjenige der Leitung 33, so wird diese geringe Differenz bereits so sehr verstärkt, dass sich am Ausgang der Komparatorstufe 35 ein Signal ergibt, durch den ein Relais-Magnet 41 erregt wird und damit die Kontaktzunge 38 gegen den Kontakt 37 zieht. Somit gelangt der Parameterwert aus der Leitung 34 unmittelbar an den Ausgang 40.

Im wesentlichen hat also die Schaltung die Funktion einer Torschaltung, die nur unter vorbestimmten Umständen ein Eingangssignal durchlässt. Dies wird anhand der Variante b) deutlicher, in der am Ausgange der Komparatorstufe 35 je eine Schaltstufe 42 bzw. 43 einerseits unmittelbar und anderseits über ein Inversionsglied 44 angeschlossen sind. Unter der Annahme, dass auch hier die Komparatorstufe 35 von einem hoch verstärkenden Differenzverstärker gebildet ist, ergibt sich am Ausgange der Komparatorstufe 35 bei einem geringen positiven Unterschied ein Signal, das unmittelbar die Schaltstufe 42 im Sinne eines Durchschalters der Eingangsleitung 34 an den Ausgang 40 betätigt. Bei geringer negativer Differenz hingegen ergibt sich ein deutliches Schaltsignal am Ausgange der Komparatorstufe 35, das über den Inverter 44 positiv wird und als solches die Schaltstufe 43 im Sinne eines Durchschaltens der Leitung 33 an die Ausgangsleitung 40 betätigt. Der Inverter 44 ist hierbei deshalb nötig, um die beiden Schaltstufen 42, 43 gleichartig ausbilden zu können, doch ist es prinzipiell auch möglich, die Schaltstufe 43 so zu gestalten, dass sie von einem negativen Signal geschalten wird, so dass ein Inverter 44 entbehrlich ist.

Die Variante d) zeigt, dass es nicht unbedingt erforderlich ist, zwei Messwerte untereinander zu vergleichen, sondern es kann mit einem Schwellwertschalter 135 ein über die Leitung 33 hereinkommendes Messwertsignal mit einem durch einen Widerstand R5 (bzw. durch einen Spannungsteiler) gegebenen Festwert verglichen werden, der über eine Eingangsleitung 134 mit dem Schwellwertschalter 135 verbunden ist. Die Anordnung ist dabei so getroffen, dass eine Schalterstufe 142 normalerweise die Leitung 134 mit der Ausgangsleitung 40 verbindet. Je nach Ausbildung des Schwellwertschalters 35 ergibt sich an seinem Ausgange entweder bei Ueberschreiten oder bei Unterschreiten einer vorbestimmten Schwelle ein Signal. Die Schwelle ist dabei so gewählt und eingestellt, dass sie einen oberen oder unteren Schwellwert entspricht. Das Ausgangssignal am Ausgange des Schwellwertschalters 135 schliesst einerseits die Schaltstufe 143 unmittelbar, wogegen die Schaltstufe 142 über einen Inverter 40 geöffnet wird, so dass nun anstelle des Signales aus der Leitung 134 das Messignal aus der Leitung 33 an die Ausgangsleitung 40 gelangt.

Die bisher besprochenen Ausführungen einer Auswerteeinrichtung für einen Extremwert sind im Prinzip nur für den Vergleich zweier Messwerte geeignet. Um mehrere Messwerte (etwa im Falle einer dritten in Serie geschalteten Pelletpresse) untereinander vergleichen zu können, ist es bei Anwendung dieser Schaltungen erforderlich, mehrere solcher Komparatorstufen hintereinander zu schalten. Es ist aber auch durchaus möglich, drei oder mehr Messwerte gleichzeitig in einer einzigen Schaltung zu vergleichen, wie anhand der Varianten c) und e) gezeigt werden soll. Hierbei handelt es sich um die Parallelschaltung von als einfache Dioden D1, D2, D3 wiedergegebenen Ventilen, die ähnlich geschaltet sind, wie dies bei Punktanzeigen mit LED's bekannt ist. Dementsprechend können die aus solchen Schaltungen bekannten Modifikationen auch hier entsprechend angewandt werden. Es versteht sich dabei, dass bei den bei Pelletpressen vorkommenden Signalen zweckmässig eine entsprechende Verstärkung zwischengeschaltet sein kann.

Es sei nun angenommen, dass von den drei anliegenden Spannungen $U_1$, $U_2$, $U_3$ die Spannung $U_1$ die Minimalspannung ist, die Spannung $U_3$ hingegen die Maximalspannung. Bei der Schaltung c) wird daher die Diode D3 das Signal durchlassen, wogegen die Dioden D1, D2 draufhin gesperrt werden. Somit fliesst bei dieser Schaltung über die Ausgangsleitung 40 jeweils der maximale Extremwert.

Bei der Variante e) ist die Schaltung prinzipiell gleich, doch sind die Dioden D1, D2, D3 umgepolt, so dass der Vorgang umgekehrt abläuft Dementsprechend fliesst über die Ausgangsleitung 40 die Minimalspannung $U_1$, wobei die Diode D1 geöffnet ist, die Dioden D2, D3 sperren. Der Widerstand R6 ist bei beiden Varianten gegebenenfalls einstellbar. Wenn hierbei gesagt wurde, dass im Falle der Variante c) die Maximalspannung $U_3$, im Falle der Variante e) die Spannung $U_1$ über die Ausgangsleitung 40 fliesst, so ist dabei selbstverständlich noch der Spannungsabfall über die jeweilige Diode zu berücksichtigen. Demgegenüber sind die Schaltungen nach den Varianten a), b) und d) im wesentlichen verlustfrei. Es versteht sich ebenso, dass im Falle der Varianten c) und e) jeweils diejenige Diode öffnet, an der der entsprechende Extremwert anliegt, so dass hier mit einer verhältnismässig einfachen Schaltung unter mehreren Eingangsmesswerten jeweils der Extremwert ausgewählt wird.

Im Rahmen der Erfindung sind nicht nur die beschriebenen Merkmale untereinander sowie mit Merkmalen des Standes der Technik kombinierbar, sondern es sind auch zahlreiche Varianten möglich; beispielsweise kann es bei der Anordnung miteinander verbundener zweier Pressen 301, 401 vorteilhaft sein, wenn beiden Pressen 301, 401 eine einzige Hebeeinrichtung zum Heben der Matrizenformen der beiden Pressen (oder anderer schwerer Teile) gemeinsam ist Dies kann so erfolgen, dass bei der Anordnung gemäss den Fig. 13 bis 16 etwa in der Mitte zwischen den Pressen 301, 401 (bezogen auf Fig. 13), gegen die Frontseite mit den Einfüllschächten 6 zu ein Mast mit einem nach beiden Seiten schwenkbaren Ausleger angeordnet ist, an dem das nun wahlweise zur Presse 301 oder 401 schwenkbare Hebezeug befestigt ist. Eine andere Möglichkeit besteht darin, dass quer über den beiden Pressen 301, 401 eine Schiene verläuft, an der das Hebezeug, z.B. ein Flaschenzug, nach Art einer Laufkatze zur einen oder anderen Presse verfahrbar ist.

Eine weitere vorteilhafte Abwandlung kann im Falle der Fig. 13 bis 16 darin bestehen, dass der sich zwischen dem Einfülltrichter 202 und dem Schneckenmischer 104 erstreckende Abschnitt der Dosierschnecke 203 weggelassen wird, wobei die Dosierschnecke 203 im Parallelbetrieb der beiden Pressen 301, 401 nur in einer Richtung in den Mischer 204 fördert, bei Serienbetrieb hingegen abgeschaltet ist. In diesem Falle ist die Unterbrecherstufe 76 im Stromkreis des Motors 72 vorgesehen, während die Umkehrstufe 73 entfallen kann. Dagegen fördert die Dosierschnecke 103 sowohl im Serien- wie auch im Parallelbetrieb in den Mischer 104. Auf diese Weise kann also die Konstruktion vereinfacht werden.

Ferner kann eine der Umschaltklappe 77 (Fig. 15) analoge Umschaltmöglichkeit auch etwa bei einer Ausführung nach den Fig. 5, 6 oder 9 bis 11 vorgesehen sein, um wahlweise Parallel- oder Serienbetrieb, oder auch nur den Betrieb einer Matrize bzw. Matrizenfläche zu ermöglichen.

Eine weitere Möglichkeit liegt darin, den Druck der Rollen oder die Drehzahl des Antriebes des Druckpelletierers der Messeinrichtung 82, 182 zu regeln, wie dies für einen Druckpelletierer bereits vorgeschlagen wurde.

## Patentansprüche

1. Vorrichtung zum Erzeugen eines pelletierten Futtermittels durch Pelletieren seiner Bestandteile unter Druck, mit Einrichtungen zum aufeinanderfolgenden Pelletieren ein und desselben Ausgangsmateriales, die mindestens eine Lochmatrize und wenigstens eine, an dieser Lochmatrize abrollende Pressrolle aufweisen, dadurch gekennzeichnet, dass entweder innerhalb eines einzigen Druckpelletierers (1) eine Zuführanordnung (21-24), insbesondere eine Rückführanordnung, für pelletiertes Material für einen weiteren Pelletiervorgang vorgesehen ist oder
eine Zuführanordnung (624) vom Ausgange eines vorhergehenden Druckpelletierers (307; 407; 301) zum Eingang eines nachgeschalteten Druckpelletierers (207; 401) führt, wobei wenigstens eines der folgenden Merkmale vorgesehen ist:
a) dass eine Umschalteinrichtung (73, 76, 77) für einen wahlweisen Parallelbetrieb der beiden Druckpelletierer (301, 401) insbesondere mit zylinderförmiger Lochmatrize, vorgesehen ist, die zumindest eine Verschliesseinrichtung (77) für einen im Parallelbetrieb freigebbaren Ausgang (417) des im Serienbetrieb vorgeschalteten Druckpelletierers (301), zweckmässig aber auch einen Umschalter (73, 76) für die Direktspeisung des im Serienbetrieb nachgeschalteten Druckpelletierers (401), aufweist;·
b) dass eine Messeinrichtung (82, 182) zum Messen der Leistung wenigstens einer der beiden Druckpelletierer (301, 401), insbesondere zum Messen der Stromaufnahme des dem Druckpelletierer (301, 401) zugeordneten Antriebsmotors (179, 279), vorgesehen ist, der eine Regeleinrichtung (84) für die Betriebsparameter der Druckpelletierer (301, 401), insbesondere ihrer Materialzufuhr, gegebenenfalls aber auch der Materialkonsistenz, nachgeschaltet ist.

2. Vorrichtung nach Anspruch 1, dadurch gekennzeichnet, dass die Zuführanordnung (21-24) im Anschluss an einen an einer Lochmatrize (7) angeordneten Abstreifer (15) eine Fördereinrichtung (22; 122) aufweist, die vorzugsweise mit wenigstens einer Förderschnecke (22; 122) versehen ist.

3. Vorrichtung nach Anspruch 1 oder 2, dadurch gekennzeichnet, dass die Zuführanordnung (21-24) nach einer Speiseeinrichtung (3) in einen Einlasskanal (6) des Druckpelletierers (1) einmündet.

4. Vorrichtung nach Anspruch 1, 2 oder 3, dadurch gekennzeichnet, dass durch die Zuführanordnung (121-124) pelletiertes Material (M1) aus der vorhergehenden Pelletierbehandlung, mittels einer ersten Pressfläche (9; 307; 407; F/3 bzw. F/2), einer zweiten Pressfläche (10; 207; 2F/3 bzw. F2) zuführbar ist, dass vorzugsweise die beiden Pressflächen von einander benachbarten Matrizenflächen (207, 307; 207, 407, F) gebildet sind.

5. Vorrichtung nach Anspruch 4, dadurch gekennzeichnet, dass die beiden benachbarten Matrizenflächen von einer Zylinderfläche einer radial äusseren Matrize (207) gebildet ist, die eine innere Matrize (307 bzw. 407) umschliesst, wobei zweckmässig die beiden Matrizen (207, 307) zueinander konzentrisch sind, gegebenenfalls aber auch die innere Matrize (407) als Pressrolle in der Innenfläche der äusseren (207) abrollt, die gewünschtenfalls an ihrem Umfange, besonders dem Aussenumfang, antreibbar ist.

6. Vorrichtung nach einem der Ansprüche 1 bis 5, dadurch gekennzeichnet, dass die einander benachbarten Matrizenflächen (2F/3, F3) axial nebeneinander angeordnet sind, und dass bevorzugt wenigstens der ersten Matrizenfläche (F/3) ein aus zumindest einer Arbeitslage in eine Ruhelage verstellbarer Abstreifer (315) zugeordnet ist.

7. Vorrichtung nach einem der Ansprüche 1 bis 6, dadurch gekennzeichnet, dass ein Extremwertselektor (83), insbesondere ein Maximumselektor, vorgesehen ist, über den zumindest im wesentlichen nur das jeweils extremere Messwertsignal der Regeleinrichtung (84) zuführbar ist.

8. Vorrichtung nach einem der Ansprüche 1 bis 7, dadurch gekennzeichnet, dass der Druckpelletierer (1) eine über eine Antriebseinrichtung (13) zu einer Drehung angetriebene Zylindermatrize (7) aufweist.

9. Verfahren zum Erzeugen eines pelletierten Futtermittels durch Pelletieren seiner Bestandteile unter Druck, bei dem das erhaltene pelettierte Produkt zumindest zum Teil auf einem Druckpelletierer wenigstens ein weiteres Mal behandelt wird und wenigstens ein Druckpelletierer, insbesondere jeder Druckpelletierer, von einer eine Lochmatrize und darauf abrollende Pressrollen aufweisenden Pelletpresse gebildet ist, dadurch gekennzeichnet, dass zwischen der vorhergehenden Pelletierbehandlung und der nachfolgenden Pelletierbehandlung eine Qualitätsprüfung der erhaltenen Pellets vorgenommen wird, wobei die der Soll-Qualität entsprechenden Pellets zur weiteren Verwendung ausgeschieden, die dieser Soll-Qualität nicht entsprechenden Pellets einer weiteren Pelletierbehandlung unterzogen werden.

10. Vorrichtung zur Durchführung des Verfahrens nach Anspruch 8, dadurch gekennzeichnet, dass eine Qualitätsprüf- und Separiereinrichtung (58, 158) in die Zuführanordnung (424 bzw. 524) geschaltet ist, wobei dem weiteren Pelletiervorgang nur pelletiertes Material ungenügender Qualität aus der Qualitätsprüf- und Separiereinrichtung (58, 158) zuführbar ist.

**Claims**

1. Apparatus for the production of a pelleted feed by pelletising its constituents under pressure, with means for the successive pelletising of one and the same raw material which comprise at least one perforated mould and at least one press roller rolling on this perforated mould, characterised in that either a feed arrangement (21-24), especially a return arrangement, for pelletised material for a further pelletising operation is provided within a single pressure pelletiser (1),

or a feed arrangement (624) leads from the outlet of a preceding pressure pelletiser (307; 407; 301) to the inlet of a downstream pressure pelletiser (207; 401), at least one of the following features being provided:

a) that a switch-over device (73, 76, 77) is provided for selective in-parallel operation of the two pressure pelletisers (301, 401), especially having a cylindrical perforated mould, which device comprises at least one closure device (77) for an outlet (417), freeable in operation in parallel, of the pressure pelletiser (301) which is the preceding pelletiser in series operation, but advantageously also a switch-over means (73, 76) for the direct supply of the pressure pelletiser (401) which is the subsequent pelletiser in series operation;

b) that a measuring device (82, 182) is provided for measuring the capacity of at least one of the two pressure pelletisers (301, 401), especially for measuring the current consumption of the drive motor (179, 279) associated with the pressure pelletiser (301, 401), and to the output side of the said measuring device there is connected a control system (84) for the operating parameters of the pressure pelletisers (301, 401), especially their material infeed, but possible also the material consistency.

2. Apparatus according to claim 1, characterised in that the feed arrangement (21-24) has, after a stripper (15) arranged at a perforated mould (7), a transporting device (22; 122) which is preferably provided with at least one transporting worm (22; 122).

3. Apparatus according to claim 1 or 2, characterised in that the feed arrangement (21-24) opens after a supply device (3) into an inlet duct (6) of the pressure pelletiser (1).

4. Apparatus according to claim 1, 2 or 3, characterised in that pelleted material (M1) from the preceding pelletising treatment, by means of a first press surface (9; 307; 407; F/3 or F/2 respectively), is feedable to a second press surface (10; 207; 2F/3 or F2 respectively) by the feed arrangement (121-124), and that preferably the two press surfaces are formed of mutually adjacent mould surfaces (207, 307; 207, 407, F).

5. Apparatus according to claim 4, characterised in that the two adjacent mould surfaces are formed of a cylindrical surface of a radially external mould (207) which surrounds an inner mould (307 or 407), and conveniently the two moulds (207, 307) are concentric with respect to one another, but the inner mould (407) may also roll as a press roller in the inner surface of the outer mould (207) which, if so desired, may be driven circumferentially, especially at its outer circumference.

6. Apparatus according to one of claims 1 to 5, characterised in that the mutually adjacent mould surfaces (2F/3, F3) are situated axially adjacent one another, and that preferably at least the first mould surface (F/3) has associated therewith a stripper (315) which is adapted to be adjusted from at least one working position into a position of rest.

7. Apparatus according to one of claims 1 to 6, characterised in that an extreme value selector (83), especially a maximum selector, is provided by means of which at least substantially only the more extreme measurement value signal in each case is feedable to the control system (84).

8. Apparatus according to one of claims 1 to 7, characterised in that the pressure pelletiser (1) has a cylindrical mould (7) driven rotationally by means of a drive device (13).

9. Process for producing a pelleted feed by pelletising its components under pressure, wherein the pelleted product obtained is treated at least one further time at least in part on a pressure pelletiser, and at least one pressure pelletiser, especially each pelletiser, is formed of a pellet press having a perforated mould and press rollers which roll thereon, characterised in that between the preceding pelletising treatment and the subsequent pelletising treatment the quality of the pellets obtained is tested, the pellets which come up to the desired quality being separated out for further use, the pellets which do not correspond to this desired quality being subjected to a further pelletising treatment.

10. Apparatus for carrying out the process according to claim 8, characterised in that a quality testing and separating device (58, 158) is connected into the feed arrangement (424, 524 respectively), only pelleted material of inadequate quality from the quality testing and separating device (58, 158) being feedable to the further pelletising operation.

**Revendications**

1. Dispositif pour la production d'un fourrage pelletisé, par pelletisation sous pression de ses constituants, comportant des dispositifs pour la pelletisation successive d'une seule et même matière première, qui comportent au moins une matrice perforée et au moins un rouleau de pressage roulant sur cette matrice perforée, caractérisé en ce qu'on prévoit soit, à l'intérieur d'un seul pelletiseur sous pression (1), un dispositif d'amenée (21-24), en particulier un dispositif de recyclage, pour le matériau pelletisé, en vue d'une autre opération de pelletisation, soit un dispositif d'amenée (624), de la sortie d'un pelletiseur sous pression (307; 407; 301) amont à l'entrée d'un pelletiseur sous pression (207; 401) aval, l'une au moins des caractéristiques suivantes étant prévue:

a) on prévoit un dispositif de commutation (73, 76, 77) pour un fonctionnement en parallèle, en option, des deux pelletiseurs sous pression (301, 401), en particulier de la matrice perforée en forme de cylindre, qui comporte au moins un dispositif de fermeture (77) pour une sortie (417), autorisée en fonctionnement en parallèle, du pelletiseur sous pression (301), situé en amont dans le montage en série, mais avantageusement aussi un commutateur (73, 76) pour l'alimentation directe du pelletiseur sous pression (401), situé en aval dans le montage en série;

b) on prévoit un dispositif de mesure (82, 182) destiné à mesurer la capacité d'au moins l'un des deux pelletiseurs sous pression (301, 401), à mesurer en particulier la consommation d'électricité du moteur d'entraînement (179, 279), associé au pelletiseur sous pression (301, 401), un dispositif de réglage (84), pour les paramètres de fonctionnement des pelletiseurs sous pression (301, 401), en particulier aussi pour leur alimentation en produit, le cas échéant aussi pour la consistance de celui-ci, étant monté en aval.

2. Dispositif selon la revendication 1, caractérisé en ce que le dispositif d'amenée (21-24) comporte, à la suite d'un racloir (15), disposé sur une matrice perforée (7), un dispositif de transport (22; 122) qui est équipé de préférence d'au moins une vis de transport (22; 122).

3. Dispositif selon la revendication 1 ou 2, caractérisé en ce que le dispositif d'amenée (21-24) débouche, après un dispositif d'alimentation (3), dans un canal d'entrée (6) du pelletiseur sous pression (1).

4. Dispositif selon les revendications 1, 2 ou 3, caractérisé en ce que, grâce au dispositif d'amenée (121-124), le produit pelletisé (M1), provenant du traitement précédent de pelletisation, est amené, au moyen d'une première surface de pressage (9; 307; 407; F/3 ou F/2), à une deuxième surface de pressage (10; 207; 2F/3 ou F2), en ce que de préférence les deux surfaces de pressage sont formées par des faces de matrice (207, 307; 207, 407, F) adjacentes.

5. Dispositif selon la revendication 4, caractérisé en ce que les deux faces de matrice adjacentes sont formées par une surface cylindrique d'une matrice (207), radialement extérieure, qui entoure une matrice intérieure (307 ou 407), les deux matrices (207, 307) étant avantageusement concentriques l'une par rapport à l'autre, mais éventuellement aussi la matrice intérieure (407) roulant, à la manière d'un rouleau de pressage, dans la surface intérieure de la matrice extérieure (207) qui, au besoin, est entraînée sur son pourtour, en particulier son pourtour extérieur.

6. Dispositif selon l'une quelconque des revendications 1 à 5, caractérisé en ce que les faces de matrice (2F/3, F3) adjacentes sont juxtaposées axialement et en ce que, de préférence, un racloir (315), réglable au moins d'une position de travail à une position de repos, est associé à au moins la première face de matrice (F/3).

7. Dispositif selon l'une quelconque des revendications 1 à 6, caractérisé en ce qu'on prévoit un sélecteur de valeur extrême (83), en particulier un sélecteur de maximum, par lequel on n'envoie, au moins pour l'essentiel, que le signal de la valeur mesurée la plus extrême, au dispositif de réglage (84).

8. Dispositif selon l'une quelconque des revendications 1 à 7, caractérisé en ce que le pelletiseur sous pression (1) comporte une matrice cylindrique (7), entraînée en rotation, par un dispositif d'entraînement (13).

9. Procédé de production d'un fourrage pelletisé, par pelletisation sous pression de ses constituants, dans lequel le produit pelletisé obtenu est traité, au moins en partie, au moins une autre fois dans un pelletiseur sous pression et en ce qu'au moins un pelletiseur sous pression, en particulier chaque pelletiseur sous pression, est formé par une presse à pelletiser, présentant une matrice perforée et des rouleaux de pressage roulant sur celle-ci, caractérisé en ce qu'on procède à un contrôle de qualité des pellets obtenus, entre le premier traitement de pelletisation et le traitement de pelletisation suivant, les pellets correspondant à la qualité requise, étant séparés pour leur utilisation ultérieure et les pellets ne correspondant pas à la qualité requise étant soumis à un autre traitement de pelletisation.

10. Dispositif pour la mise en œuvre du procédé selon la revendication 8, caractérisé en ce qu'on monte dans le dispositif d'amenée (424 ou 524), un dispositif de contrôle de qualité et de séparation (58, 158), seul le produit pelletisé de qualité insuffisante, provenant du dispositif de contrôle de qualité et de séparation (58, 158), étant envoyé à l'opération de pelletisation complémentaire.

Fig.1

EP 0 201 052 B1

**Fig. 2**

**Fig. 3**

Fig.4

Fig.5

**Fig. 6**

**Fig. 8**

**Fig. 7**

**Fig. 9**

**Fig. 10**

**Fig. 11**

Fig. 12

Fig. 13

Fig. 14

Fig. 15

Fig. 16

Fig. 17

a)

b)

c)

d)

e)